# FASCICULE DE BREVET EUROPEEN

(11) **EP 3 698 237 B1**
(45) Date de publication et mention de la délivrance du brevet: **13.12.2023**
(21) Numéro de dépôt: 18812231.1
(22) Date de dépôt: 18.10.2018
(51) Int. Cl.: G06F 3/023, G06F 3/0488, G06F 3/04886

(54) **DISPOSITIF INFORMATIQUE A INTERFACE TACTILE AMÉLIORÉE ET PROCÉDÉ CORRESPONDANT**
COMPUTERVORRICHTUNG MIT VERBESSERTER BERÜHRUNGSSCHNITTSTELLE UND ZUGEHÖRIGES VERFAHREN
COMPUTER DEVICE WITH IMPROVED TOUCH INTERFACE AND CORRESPONDING METHOD

(30) Priorité: 20.10.2017 FR 1759911
(43) Date de publication de la demande: 26.08.2020
(73) Titulaire: INRIA - Institut National de Recherche en Informatique et en Automatique, 78150 Le Chesnay (FR)
(72) Inventeur: MACKAY, Wendy, 91120 Palaiseau (FR); ALVINA, Jessalyn, 91120 Palaiseau (FR)
(74) Mandataire: Vidon Brevets & Stratégie
(86) Numéro de dépôt international: PCT/FR2018/052598
(87) Numéro de publication internationale: WO 2019/077279

(56) Documents cités:
- EP-A2- 2 336 852
- WO-A1-2015/087084
- WO-A2-2008/133619
- US-A1- 2017 097 765
- JESSALYN ALVINA ET AL: "CommandBoard : Creating a General-Purpose Command Gesture Input Space for Soft Keyboard", PROCEEDINGS OF THE 30TH ANNUAL ACM SYMPOSIUM ON USER INTERFACE SOFTWARE AND TECHNOLOGY , UIST '17, 22 octobre 2017 (2017-10-22), pages 17-28, XP055481813, New York, New York, USA DOI: 10.1145/3126594.3126639 ISBN: 978-1-4503-4981-9

## Description

L'invention concerne le domaine des interfaces de saisie tactile.

Les 15 dernières années ont vu un développement massif des interfaces de saisie tactile pour les dispositifs électroniques. La saisie de texte sur ces dispositifs est réalisée par le biais d'un clavier affiché à l'écran, l'utilisateur venant appuyer sur les touches du texte qu'il souhaite écrire.

Ce type d'interaction étant diversement perçu par les individus du fait de l'absence d'un retour physique comme dans le cas d'un clavier à touches, des logiciels ont été développés afin de favoriser une saisie plus naturelle dans un contexte tactile. Ces outils sont également connus sous le terme anglais « gesture keyboards », et l'entrée de texte est réalisée en déplaçant de manière continue le doigt sur l'interface d'une lettre à l'autre d'un mot que l'utilisateur souhaite entrer. Un algorithme analyse le déplacement du doigt et est généralement combiné à un dictionnaire pour déterminer le mot souhaité.

Ces outils ont été très rapidement adoptés par une grande partie des utilisateurs. Cependant, ils ne permettent que d'entrer du texte. Toutes les options attachées à ce texte, telles que le formatage, mais également l'utilisation du texte entré pour autre chose que la simple frappe, par exemple pour accéder à des paramètres ou des fonctions système, est totalement impossible.

Le document WO 2008/133619 A2 propose un dispositif de reconnaissance de trait continu pour anticiper une commande souhaitée et permettre à l'utilisateur de la prévisualiser, ainsi que des commandes proches, avant de valider l'entrée de trait continu. Le document EP 2 336 852 A2 concerne un système de saisie de texte proposant à l'utilisateur des fonctions rapides et faciles à exécuter par des déplacements réalisés sur un clavier virtuel. Le document WO 2015/087084 A1 décrit un système et un procédé de prédiction d'une image ou d'une étiquette pertinente pour une entrée de texte d'un utilisateur. Enfin, le document US 2017/097765 A1 concerne un procédé de fourniture de service dans lequel un clavier virtuel affiche des contenus prédits et permet à l'utilisateur de sélectionner un service associé à chaque contenu prédit.

L'invention vient améliorer la situation.

À cet effet, l'invention propose un dispositif informatique comprenant un écran capable d'acquisition tactile, et un processeur agencé pour commander l'affichage d'une représentation d'un clavier sur une portion clavier de l'écran et pour déterminer des données d'entrée textuelles lors d'un déplacement continu d'un outil d'entrée tactile sur la portion clavier de l'écran. Le processeur est en outre agencé, lors d'un déplacement continu d'un outil d'entrée tactile sur l'écran dans la portion clavier, pour détecter le passage de l'outil d'entrée tactile depuis la portion clavier vers une portion commande de l'écran, pour détecter le déplacement de l'outil d'entrée tactile dans la portion commande et déterminer une opération système en fonction de ce déplacement, et, si le déplacement continu se termine dans la portion commande, pour exécuter l'opération système.

Ce dispositif est particulièrement intéressant, car il permet d'utiliser la portion de l'écran située au-dessus du clavier pour enrichir l'interface de saisie tactile, et permettre de déclencher des fonctions complexes qui n'étaient auparavant accessibles que par des cascades de menus inadaptées au contexte tactile et/ou par un changement d'application rendant l'expérience utilisateur médiocre. En effet, l'utilisateur peut saisir le texte dans la portion clavier comme il y est habitué en mode « gesture keyboard », et la portion complémentaire lui permet, dans le prolongement du même geste, d'aller exécuter une opération système qui peut être désignée par le texte qu'il a saisi dans la portion clavier, ou encore être une opération qui s'applique au texte saisi dans la portion clavier.

Dans diverses variantes, le dispositif selon l'invention pourra présenter l'une ou plusieurs des caractéristiques suivantes :
- le processeur est en outre agencé, lors d'un déplacement continu d'un outil d'entrée tactile sur l'écran, pour déterminer en outre l'opération système utilise comme argument en fonction de données d'entrée textuelles déterminées avant le passage du déplacement continu de l'outil d'entrée tactile depuis la portion clavier vers unela portion commande,
- le processeur est en outre agencé, lors du déplacement continu d'un outil d'entrée tactile sur l'écran dans la portion clavier, pour déterminer une opération système en fonction de données d'entrées textuelles déterminées les données d'entrée textuelles à partir d'unu déplacement de l'outil d'entrée tactile dans la portion clavier, et, si le déplacement continu se termine dans la portion commande, pour exécuter cette opération système en réponse à la détection d'un déplacement dans la portion commande associé à une opération système d'exécution,
- le processeur est en outre agencé, lors du déplacement continu d'un outil d'entrée tactile sur l'écran dans la portion clavier, pour commander la représentation sur l'écran d'un élément visuel associé à une opération système déterminée en fonction de données d'entrées textuelles déterminées à partir du déplacement de l'outil d'entrée tactile dans la portion clavier,
- le processeur est agencé, après avoir détecté le passage de l'outil d'entrée tactile de la portion clavier vers la portion commande de l'écran et lors du déplacement de l'outil d'entrée tactile dans la portion commande, pour détecter ce déplacement et pour afficher une représentation sur l'écran d'un élément visuel associé à d'au moins une opération système correspondant à ce déplacement, et
- le processeur est agencé pour déterminer qu'un le déplacement détecté dans la portion commande correspond partiellement à un déplacement permettant de déterminer une opération système, et dans lequel le processeur est entre outre agencé pour afficher une représentation textuelle de l'opération système dont le déplacement associé correspond partiellement au déplacement détecté dans la portion commande et/ou pour afficher une représentation d'un déplacement restant à effectuer pour désigner l'opération système dont le déplacement associé correspond partiellement au déplacement détecté dans la portion commande.

L'invention concerne également un procédé de gestion d'entrée tactile de données mis en oeuvre par un ordinateur présentant un affichage capable d'acquisition tactile, comprenant les opérations suivantes :
a) acquérir des données d'entrée textuelles dans une portion clavier de l'écran,
b) acquérir des données de déplacement d'un outil d'entrée tactile,
c) en réponse à la détection d'un déplacement continu de l'outil d'entrée tactile de la portion clavier vers une portion commande de l'écran,
   c1) détecter le déplacement de l'outil d'entrée tactile dans la portion commande de l'écran,
   c2) déterminer une opération système en correspondance du déplacement détecté dans l'opération c1), et,
   c3) si le déplacement continu se termine dans la portion commande, exécuter l'opération système.

Dans diverses variantes, le dispositif selon l'invention pourra présenter l'une ou plusieurs des caractéristiques suivantes :
- l'opération c2) comprend en outre de déterminer l'opération système en fonction de données d'entrée textuelles acquises dans l'opération a),
- l'opération c1) comprend la détermination de données d'entrée textuelles à partir d'un déplacement continu de l'outil d'entrée tactile dans la portion clavier,
- l'opération a) comprend la détermination de données d'entrées textuelles déterminées à partir du déplacement de l'outil d'entrée tactile dans la portion clavier et l'affichage sur l'écran d'un élément visuel associé à une opération système déterminée en fonction des données d'entrée textuelles,
- l'opération c2) comprend l'affichage sur l'écran d'un élément visuel associé à l'opération système déterminée,
- l'opération c2) comprend la détermination d'une ou plusieurs opérations système correspondant au déplacement de l'opération c1), et l'affichage pour certaines au moins de cette ou ces plusieurs opérations système du ou des déplacements restant à effectuer pour désigner certaines au moins de cette ou ces plusieurs opérations système, et
- l'opération c) comprend l'affichage d'une portion contextuelle dans la portion commande en fonction de données d'entrées textuelles de l'opération a)

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique d'un dispositif selon l'invention,
- la figure 2 représente un exemple de réalisation d'une fonction par le dispositif de la figure 1,
- la figure 3 représente un autre exemple de réalisation d'une fonction par le dispositif de la figure 1, et
- les figures 4 à 6 montrent des exemples pratiques de mise en oeuvre des fonctions des figures 2 et 3.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

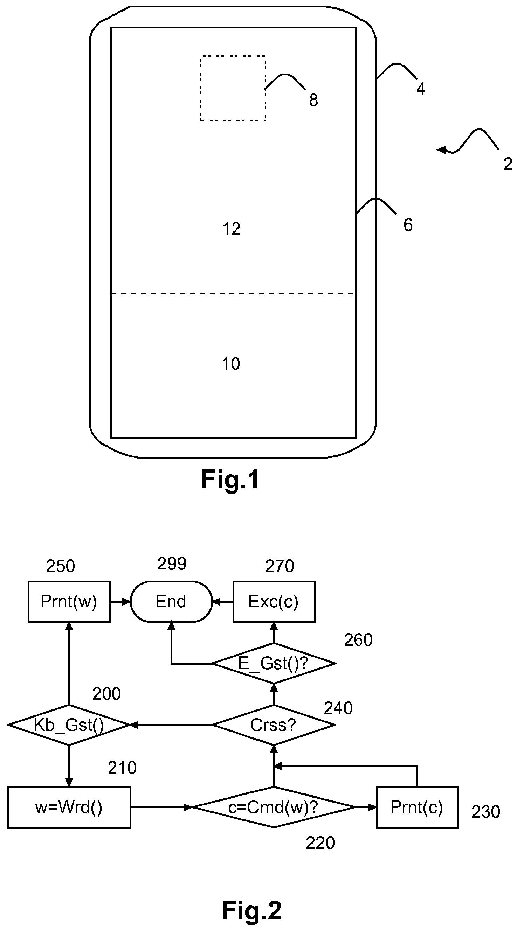

La figure 1 représente une vue schématique d'un dispositif 2 selon l'invention. Dans l'exemple décrit ici, le dispositif 2 est un téléphone portable moderne, également appelé smartphone.

De fait, l'invention s'applique à tout dispositif informatique qui présente une interface tactile. Ces dispositifs pourront donc être des ordinateurs, des tablettes, ou des combinaisons de ces éléments, par exemple un dispositif hybridant un écran tactile et un clavier physique.

Ainsi, seuls les éléments nécessaires à la compréhension du fonctionnement du dispositif 2 sont représentés sur la figure 1. Le dispositif 2 comprend un boîtier 4, un écran 6 et un processeur 8.

Le boîtier 4 peut être de tout type adapté aux dispositifs décrits plus haut, et en toute matière connue pour ces dispositifs, du métal aux différents types de verres ou encore en plastique.

L'écran 6 peut être tout type d'écran (LED, AMOLED, OLED, etc.) muni de moyens de capture tactile (capacitif, résistif ou autre), de sorte que tout outil d'entrée tactile, que ce soit un doigt ou un stylet, puisse entrer des informations en touchant ou en frôlant l'écran 6.

Sur l'écran 6, une ligne en pointillés a été ajoutée afin de représenter une séparation fondamentale dans le traitement réalisé par le dispositif 2. Ainsi, la ligne en pointillés sépare l'écran 6 en une portion clavier 10 et une portion commande 12. Cette séparation est fondamentale dans le cadre de l'invention et représente le coeur du fonctionnement du dispositif 2. Bien sûr, comme le clavier n'est pas physique, la séparation entre la portion clavier 10 et la portion commande 12 est susceptible d'être déplacée selon l'affichage commandé par le processeur 8. De plus, la portion clavier 10 a ici été représentée dans la partie inférieure de l'écran, car c'est généralement là qu'est affiché le clavier virtuel. Néanmoins, il est là aussi clair que la portion clavier 10 pourrait être dans la partie supérieure de l'écran et la portion commande 12 dans la portion inférieure. Dans certaines réalisations, il serait même envisageable d'avoir plusieurs portions clavier 10 et/ou plusieurs portions commande 12.

Le processeur 8 peut être tout processeur ou groupement de processeurs adapté au fonctionnement du dispositif 2. Selon les réalisations, le processeur 8 peut être un processeur généraliste, qui exécute un système d'exploitation mettant en oeuvre l'invention. Mais le processeur 8 pourrait également être un processeur dédié, ou être mis en oeuvre sous la forme d'un FPGA, SoC, ou tout autre forme adaptée.

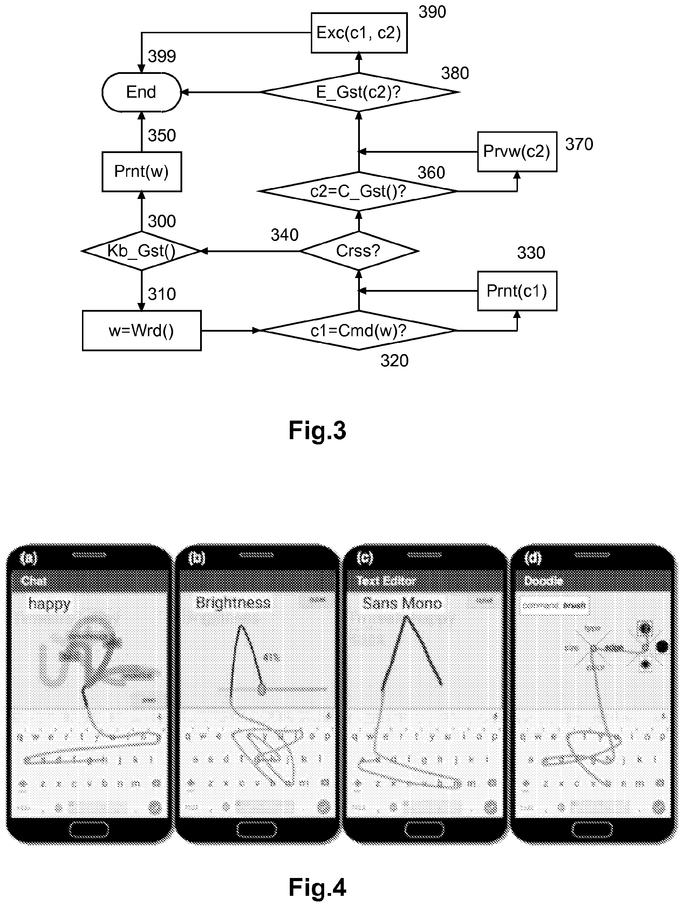

Bien que les figures 2 et 3 soient présentées sous forme d'un diagramme séquentiel, il apparaîtra que certaines opérations peuvent être exécutées en parallèle. De plus, dans ce qui suit, les termes « commande » et « opération système » pourront être utilisés l'un pour l'autre.

La figure 2 représente une première réalisation d'une fonction mise en oeuvre par le dispositif 2. Cette réalisation introduit le fonctionnement le plus élémentaire de l'invention : l'exécution de commandes.

Pour expliquer le principe, l'utilisateur va entrer une commande sous forme d'entrée texte dans la portion clavier 10, et exécuter un geste particulier dans la portion commande 12 afin de demander l'exécution de la commande.

Dans cette fonction, comme dans celle de la figure 3, un aspect essentiel est la continuité du déplacement de l'outil d'entrée tactile sur la surface tactile. En effet, tant que le déplacement est continu, c'est-à-dire que l'outil d'entrée tactile interagit avec l'écran 6, le déplacement est analysé. Au moment où l'outil d'entrée tactile cesse son interaction avec l'écran 6, par exemple lorsque l'utilisateur relève son doigt, le déplacement se termine, et les actions sont interprétées par le processeur 8 en vue d'exécuter une opération système, ou de ne rien faire.

La fonction commence avec une opération 200 dans laquelle une boucle tourne avec l'acquisition d'informations tactiles, en vue de détecter un déplacement continu dans la portion clavier 10. Lorsqu'un tel déplacement est détecté, le mot qui est en train d'être entré par l'utilisateur est détecté dans une opération 210, et une opération 220 détermine si ce mot correspond à une commande ou opération système qui est reconnue dans le contexte de l'application dans lequel est exécutée la fonction. Si c'est le cas, alors le processeur 8 affiche un texte associé à cette commande ou opération système dans la portion commande 12 dans une opération 230, par exemple le nom de la commande ou une image ou pictogramme la représentant. Ainsi, l'utilisateur sait en regardant la portion commande 12 qu'il a entré suffisamment de texte pour exécuter une commande donnée. En variante, les opérations 220 et 230 pourraient être omises.

Ensuite, un test est réalisé dans une opération 240 pour déterminer si l'outil d'entrée tactile est passé dans la portion commande 12. En effet, lorsque l'utilisateur a fini d'entrer le nom de la commande dans la portion clavier 10 et qu'il souhaite exécuter celle-ci, il déplace l'outil d'entrée tactile dans la portion commande 12.

Si ça n'est pas le cas, alors les opérations 200 à 230 sont répétées, jusqu'à ce que l'opération 240 retourne un résultat positif, ou que l'utilisateur interrompe le déplacement de l'outil d'entrée tactile. Dans ce dernier cas, comme l'opération 240 a toujours retourné un résultat négatif, il s'agit d'une situation classique dans laquelle l'utilisateur a entré un mot via la portion de clavier 10, et a fini d'entrer ce mot. Le mot est donc affiché dans une opération 250, et la fonction se termine dans une opération 299.

Si l'utilisateur décide d'exécuter une commande, alors il déplace l'outil d'entrée tactile dans la portion commande 12, et une nouvelle boucle s'exécute.

Dans le mode de réalisation de la figure 2, le dispositif 2 est simplifié, et la seule fonctionnalité de la portion commande 12 est de permettre à l'utilisateur d'exécuter une opération système ou d'annuler la saisie. Aussi, dans une opération 260, le processeur 8 détecte la fin du déplacement continu (c'est-à-dire que le doigt de l'utilisateur ou le style ne sont plus à proximité de l'écran) et analyse le déplacement de l'outil d'entrée tactile dans la portion commande 12 afin de déterminer si celui-ci correspond à une opération système de type « exécution ». Dans le cadre de ses recherches, la Demanderesse a découvert qu'un geste vertical suivi d'un geste vers le bas, à un angle aigu sur la droite ou sur la gauche (ce qui donne une forme de chiffre 1 manuscrit sans pied, ou son miroir) est particulièrement intuitif pour les utilisateurs. C'est donc ce geste qui a été retenu. Si ce mouvement est reconnu par le processeur 8, et si le mot entré dans la portion clavier 10 correspond à une commande disponible, alors le processeur 8 effectue une opération système d'exécution de cette commande, et la fonction se termine avec l'opération 299.

Lorsque l'opération 260 détermine un geste qui ne correspond pas à ce geste, ou que le mot entré dans la portion clavier 10 ne correspond à aucune commande disponible, alors la saisie est annulée et le mot entré dans la portion clavier n'est pas affiché, et la fonction se termine avec l'opération 299. Ainsi, la portion commande 12 peut aussi servir à annuler simplement une saisie erronée.

Optionnellement, si le processeur 8 détecte que l'outil d'entrée tactile passe dans la portion commande 12 puis retourne dans la portion clavier 10, le processeur 8 peut reprendre la boucle d'opérations 200 à 240. Ainsi, si un utilisateur a « accidentellement » franchi la portion clavier 10, sa saisie n'est pas perdue.

Les figures 4b), 4c) et 5a) à 5c) une mise en oeuvre de cette fonction.

Sur la figure 4b), l'utilisateur a entré les lettres « brightn » (premières lettres du mot « brightness », qui signifie luminosité en anglais). Le processeur 8 a déterminé dans l'opération 230 que ces lettres correspondent à une commande système générale qui permet d'ajuster la luminosité de l'écran, et est accessible depuis n'importe quelle application, quel que soit le contexte. Une fois le mot entré dans la portion clavier 10, et le geste « exécution » réalisé dans la portion commande 12, une glissière apparaît dans la portion commande 12 là où le geste « exécution » s'est arrêté, et l'utilisateur peut régler la luminosité en faisant glisser celle-ci. Ce type d'application peut être étendu à une roue de couleur pour choisir une police, à l'insertion d'un tableau, ou tout autre outil de type widget qui peut être invoqué par le processeur 8 lorsqu'une opération système de type « exécution » est exécutée.

Sur la figure 4c), dans un éditeur de texte, l'utilisateur a entré le mot « sans ». Le processeur 8 a affiché comme commande possible (opération 230) « Sans mono » dans la portion commande 12. Grâce à cette suggestion, l'utilisateur est passé de la portion clavier 10 dans la portion commande 12, a effectué le geste « exécution », ce qui a activé le passage de la police de texte à « Sans mono ». Dans ce cas, c'est le processeur 8 qui a déterminé que la seule commande contenant le mot « sans » était le passage à la police « Sans mono ». En variante, le processeur 8 aurait pu proposer « Sans mono » dans la portion clavier 10 en tant que saisie prédictive, et l'utilisateur aurait pu spécifier ce mot par cette saisie prédictive avant de passer dans la portion commande 12.

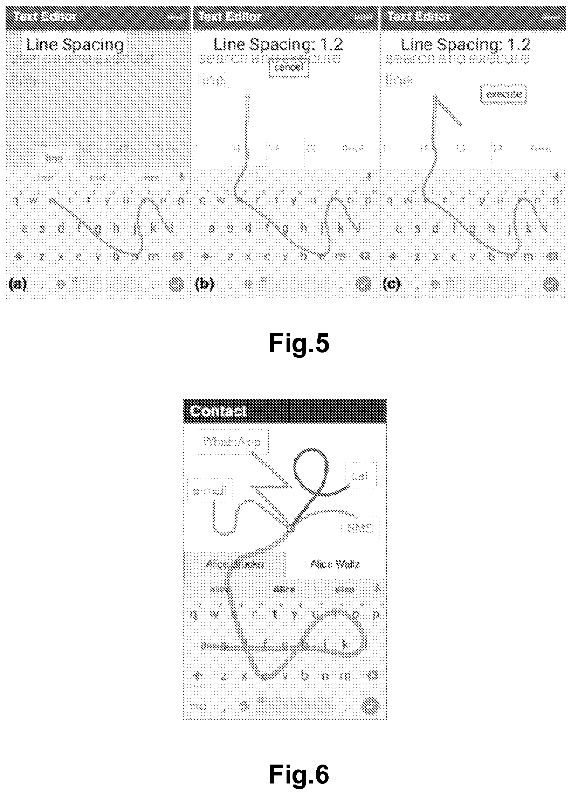

Les figures 5a) à 5c) représentent une variante de mise en oeuvre de la commande « exécution » particulièrement puissante. Certaines commandes, comme la taille de police ou l'interligne nécessitent d'invoquer plus que le seul nom de la commande, il faut aussi invoquer un nombre correspondant.

Afin de simplifier l'utilisation de ces commandes, l'invention prévoit en variante que la portion commande 12 peut prévoir une barre d'options située juste au-dessus de la portion clavier 10, et qui permet à l'utilisateur de spécifier un paramètre pour une commande.

Par exemple dans la figure 5a), dans un éditeur de texte, l'utilisateur a tapé le mot « line » (ligne en anglais). Le processeur 8 a affiché comme commande possible (opération 230) « Line spacing » (interligne) dans la portion commande 12. Comme on peut le voir sur la figure 5b), dès que l'opération 230 a identifié la commande « Line spacing », le processeur 8 a affiché la barre d'options juste au-dessus de la portion clavier 10 (ici, juste au-dessus de la partie de la portion clavier 10 dédiée à la saisie prédictive). L'utilisateur traverse la portion de la barre d'options qui correspond à la valeur d'interligne qu'il souhaite réaliser, et, comme on le voit sur la figure 5c), exécute le changement d'interligne en réalisant le geste « exécution » dans le prolongement de son mouvement.

La figure 3 propose un mode de réalisation encore plus abouti de l'utilisation de la portion commande 12. Dans ce mode de réalisation, l'utilisateur peut toujours utiliser la portion commande 12 pour exécuter une opération système ou annuler une saisie, mais il peut en plus exécuter d'autres gestes en fonction du contexte.

Ainsi, les opérations 300 à 350 sont identiques aux opérations 200 à 250. Les différences se retrouvent principalement dans la gestion de la portion commande 12. Une fois que le processeur 8 a détecté le passage de l'outil d'entrée tactile dans la portion commande 12, il procède comme précédemment en détectant et analysant le déplacement de l'outil d'entrée tactile.

Mais dans ce mode de réalisation, l'opération système à exécuter peut ne pas être désignée par le mot qui a été entré dans la portion clavier 10, mais au contraire porter sur celui-ci. Ainsi, dans deux opérations 360 et 370 similaires aux opérations 320 et 330, le processeur 8 analyse si le déplacement de l'outil d'entrée tactile dans la portion commande 12 correspond à un geste déclenchant l'exécution d'une opération système, et, le cas échéant, en affiche une représentation dans la portion commande 12. Ainsi, un utilisateur peut voir qu'un geste qu'il a réalisé dans la portion commande 12 va avoir un effet particulier sur le mot entré dans la portion clavier 10. En variante, le geste réalisé dans la portion commande 12 peut servir à spécifier un paramètre d'une commande dont le nom a été entré dans la portion clavier 10.

L'opération 370 peut être rendue particulièrement efficace en représentant dans la portion commande 12 tous les gestes qui peuvent être réalisés en fonction du déplacement déjà effectué dans la portion commande 12. Ainsi, un utilisateur qui cherche une commande peut être guidé dans le geste à réaliser. De plus, l'utilisateur peut faire une légère pause en début de l'entrée dans la portion commande 12 pour voir les options qui s'offrent à lui. Ces opérations sont utiles pour montrer à un utilisateur les opérations systèmes accessibles, et lui offrir un retour sur ses actions. Néanmoins elles pourraient être omises.

Dans une opération 380, similaire à l'opération 260, le processeur 8 détecte la fin du mouvement continu de l'outil d'entrée tactile, et analyse le déplacement dans la portion commande 12 pour déterminer s'il correspond à une commande exécutable. Comme on le verra avec la figure 4d), la notion de commande exécutable peut être très liée à l'interaction dans la portion commande 12, et ne pas être liée à un geste précis.

Lorsque le processeur détermine que le déplacement de l'outil d'entrée tactile dans la portion commande 12 correspond à une opération système de type « exécution », à une autre commande qui s'applique au texte entré dans la portion clavier 10 ou à une autre commande, cela est réalisé dans une opération 390, et la fonction se termine ensuite dans l'opération 399. Sinon, la fonction se termine directement dans l'opération 399.

Les figures 4a), 4d) et 6 permettent de comprendre plus particulièrement les nouvelles possibilités offertes par le mode de réalisation de la figure 3.

Ainsi, sur la figure 4a), dans un éditeur de texte ou une application de discussion, l'utilisateur a tapé le mot « happy » (heureux en anglais), et est passé dans la portion commande 12. Dès le passage dans la portion commande 12, l'opération 370 permet l'affichage des gestes disponibles et des commandes associées, et leur affichage permet à l'utilisateur de savoir quelle partie du geste il reste à effectuer. Ainsi, la mise en forme du mot qui vient d'être entré dans la portion clavier 10 est grandement simplifiée. On notera que cette mise en forme peut être absolue dans le cadre d'un éditeur de texte, c'est-à-dire que la commande exécutée par le processeur 8 sera « change le style du mot happy en gras » ou via l'ajout de balises comme c'est le cas dans les applications de discussion, c'est-à-dire que la commande exécutée par le processeur 8 sera « rajoute des balises autour du mot happy pour que celui-ci soit affiché en gras dans l'application ».

La figure 4d) montre un exemple particulièrement intéressant d'interaction dans la portion commande 12. Ici, l'application est une application de dessin à main libre (« Doodle » en anglais). Pour changer le style de pinceau utilisé, l'utilisateur a tapé « brush » (pinceau en anglais) dans la portion clavier 10, et est passé dans la portion commande 12. Lors du passage, le processeur 8 a affiché un menu en croix permettant à l'utilisateur de choisir une fonction. En passant par le choix « edge » (bord en anglais), le processeur 8 a complété les choix possibles pour la forme des bords du pinceau. Ainsi, ce n'est pas seulement un geste qui est détecté ici, mais une interaction gestuelle déclenchée dans la portion commande 12. Cela permet d'offrir l'équivalent d'une navigation à travers des menus déroulants, mais avec une expérience beaucoup plus confortable et compatible avec un écran tactile.

La figure 6 représente un autre cas où le contexte rend le dispositif de l'invention extrêmement puissant. Dans l'application « Contacts », un utilisateur a tapé le prénom « Alice ». Le processeur 8 a alors affiché dans la barre d'options de la portion commande 12 deux noms de contacts comprenant le prénom « Alice » : « Alice Brooke » et « Alice Waltz ». En passant dans la portion commande 12, l'utilisateur a choisi l'un des deux prénoms, et l'opération 370 lui indique quels sont les gestes qui sont disponibles pour appeler, envoyer un message, un email, déclencher une conversation dans une application de discussion, etc.

Bien sûr, les gestes disponibles dans les différents contextes pourront être entièrement paramétrables. Ainsi, certains gestes pourront être limités à certaines applications, ou au contraire être disponibles dans tous les contextes. De plus, il est possible de permettre à l'utilisateur de paramétrer tous les gestes, afin qu'il choisisse des gestes plus pertinents pour lui. Il sera également possible d'utiliser la portion commande 12 pour insérer des expressions automatiques. Par exemple, un utilisateur pourra, après avoir entré un mot dans la portion clavier 10, effectuer un geste dans la portion commande 12 pour ajouter automatiquement une expression comme un emoji, ou une expression comme « XOXO », ou toute autre expression qu'il utilise régulièrement et pour laquelle il souhaite un raccourci. L'enregistrement de ces expressions favorites pourra elle aussi être réalisée par le biais de la portion commande 12, par exemple en offrant un geste qui est une opération système du type « ajouter raccourci gestuel ». Dans les exemples ci-dessus, la saisie dans la portion clavier 10 a été décrite sur la base d'un clavier de type « gesture keyboards ». Néanmoins, elle est compatible avec une saisie classique, dès lors qu'à la fin de la frappe d'un mot, un déplacement continu est réalisé de la portion clavier 10 vers la portion commande 12. Enfin, les opérations systèmes peuvent être des commandes d'interaction avec d'autres dispositifs, par exemple pour les commander à la manière d'une télécommande.

Les modes de réalisations et exemples décrits ci-dessus sont entièrement combinables entre eux. Aussi, si une caractéristique a été décrite en rapport à un unique exemple ou un unique mode de réalisation, il doit être compris qu'elle peut être appliquée à un autre exemple ou mode de réalisation dès lors qu'elle n'est pas manifestement incompatible avec ceux-ci.

## Revendications

1. Dispositif informatique comprenant un écran (6) capable d'acquisition tactile, et un processeur (8) agencé pour commander l'affichage d'une représentation d'un clavier sur une portion clavier (10) de l'écran (6) et pour déterminer des données d'entrée textuelles lors d'un déplacement d'un outil d'entrée tactile sur la portion clavier (10) de l'écran (6), **caractérisé en ce que**
le processeur (8) est en outre agencé, lors d'un déplacement continu d'un outil d'entrée tactile sur l'écran (6), pour détecter le passage de l'outil d'entrée tactile depuis la portion clavier (10) vers une portion commande (12) de l'écran (6), pour détecter le déplacement de l'outil d'entrée tactile dans la portion commande (12), analyser si ce déplacement correspond à un geste déclenchant l'exécution d'une opération système et, le cas échéant, déterminer l'opération système en fonction de ce déplacement et afficher une représentation sur l'écran (6) d'un élément visuel associé au moins à ladite opération système, et, si le déplacement continu se termine dans la portion commande (12), pour exécuter l'opération système.

2. Dispositif selon la revendication 1, dans lequel le processeur (8) est en outre agencé, lors d'un déplacement continu d'un outil d'entrée tactile sur l'écran (6), pour déterminer en outre l'opération système en fonction de données d'entrée textuelles déterminées avant le passage de l'outil d'entrée tactile depuis la portion clavier (10) vers la portion commande (12).

3. Dispositif selon la revendication 2, dans lequel le processeur (8) est en outre agencé, pour déterminer les données d'entrée textuelles à partir d'un déplacement de l'outil d'entrée tactile dans la portion clavier (10), et, si le déplacement continu se termine dans la portion commande (12), pour exécuter cette opération système en réponse à la détection d'un déplacement dans la portion commande (12) associé à une opération système d'exécution.

4. Dispositif selon l'une des revendications précédentes, dans lequel le processeur (8) est en outre agencé, lors du déplacement continu d'un outil d'entrée tactile sur l'écran (6) dans la portion clavier (10), pour commander la représentation sur l'écran (6) d'un élément visuel associé à une opération système déterminée en fonction de données d'entrées textuelles déterminées à partir du déplacement de l'outil d'entrée tactile dans la portion clavier (10).

5. Dispositif selon l'une des revendications précédentes, dans lequel le processeur (8) est agencé pour déterminer qu'un déplacement détecté dans la portion commande (12) correspond partiellement à un déplacement permettant de déterminer une opération système, et est entre outre agencé pour afficher une représentation textuelle de l'opération système dont le déplacement associé correspond partiellement au déplacement détecté dans la portion commande (12) et/ou pour afficher une représentation d'un déplacement restant à effectuer pour désigner l'opération système dont le déplacement associé correspond partiellement au déplacement détecté dans la portion commande (12).

6. Dispositif selon l'une des revendications précédentes, dans lequel le processeur (8) est agencé pour commander l'affichage d'une portion contextuelle dans la portion commande (12) en fonction de données d'entrée textuelles.

7. Procédé de gestion d'entrée tactile de données mis en oeuvre par un ordinateur présentant un affichage capable d'acquisition tactile, comprenant les opérations suivantes :
a) acquérir des données d'entrée textuelles dans une portion clavier (10) de l'écran (6),
b) acquérir des données de déplacement d'un outil d'entrée tactile,
c) en réponse à la détection d'un déplacement continu de l'outil d'entrée tactile de la portion clavier (10) vers une portion commande de l'écran (6),
c1) détecter le déplacement de l'outil d'entrée tactile dans la portion commande (12) de l'écran (6),
c2) analyser si ce déplacement correspond à un geste déclenchant l'exécution d'une opération système et, le cas échéant,
c3) déterminer l'opération système en correspondance du déplacement détecté dans l'opération c1), et afficher une représentation sur l'écran (6) d'un élément visuel associé au moins à ladite opération système, et,
c4) si le déplacement continu se termine dans la portion commande (12), exécuter l'opération système.

8. Procédé selon la revendication 7, dans lequel l'opération c3) comprend en outre de déterminer l'opération système en fonction de données d'entrée textuelles acquises dans l'opération a).

9. Procédé selon la revendication 7 ou 8, dans lequel l'opération c1) comprend la détermination de données d'entrée textuelles à partir d'un déplacement continu de l'outil d'entrée tactile dans la portion clavier (10).

10. Procédé selon l'une des revendications 7 à 9, dans lequel l'opération a) comprend la détermination de données d'entrées textuelles déterminées à partir du déplacement de l'outil d'entrée tactile dans la portion clavier (10) et l'affichage sur l'écran (6) d'un élément visuel associé à une opération système déterminée en fonction des données d'entrée textuelles.

11. Procédé selon l'une des revendications 7 à 10, dans lequel l'opération c3) comprend la détermination d'une ou plusieurs opérations système correspondant au déplacement de l'opération c1), et l'affichage pour certaines au moins de cette ou ces plusieurs opérations système du ou des déplacements restant à effectuer pour désigner certaines au moins de cette ou ces plusieurs opérations système.

12. Procédé selon l'une des revendications 7 à 11, dans lequel l'opération c) comprend l'affichage d'une portion contextuelle dans la portion commande (12) en fonction de données d'entrées textuelles de l'opération a).

## Patentansprüche

1. Computervorrichtung, die einen Bildschirm (6), der zur Erfassung von Berührungen fähig ist, und einen Prozessor (8), der dazu eingerichtet ist, die Anzeige einer Darstellung einer Tastatur auf einem Tastaturabschnitt (10) des Bildschirms (6) zu steuern und bei einer Bewegung eines Berührungseingabewerkzeugs auf dem Tastaturabschnitt (10) des Bildschirms (6) Texteingabedaten zu bestimmen, beinhaltet, **dadurch gekennzeichnet, dass**
der Prozessor (8) ferner dazu eingerichtet ist, bei einer durchgehenden Bewegung eines Berührungseingabewerkzeugs auf dem Bildschirm (6) den Übergang des Berührungseingabewerkzeugs von dem Tastaturabschnitt (10) zu einem Steuerabschnitt (12) des Bildschirms (6) zu detektieren, die Bewegung des Berührungseingabewerkzeugs in dem Steuerabschnitt (12) zu detektieren, zu analysieren, ob diese Bewegung einer Geste entspricht, die die Ausführung einer Systemoperation auslöst, und ggf. die Systemoperation in Abhängigkeit von dieser Bewegung zu bestimmen und eine Darstellung eines visuellen Elements auf dem Bildschirm (6) anzuzeigen, das mindestens mit der Systemoperation assoziiert ist, und, wenn die durchgehende Bewegung in dem Steuerabschnitt (12) endet, die Systemoperation auszuführen.

2. Vorrichtung nach Anspruch 1, wobei der Prozessor (8) bei einer durchgehenden Bewegung eines Berührungseingabewerkzeugs auf dem Bildschirm (6) ferner dazu eingerichtet ist, ferner die Systemoperation in Abhängigkeit von Texteingabedaten zu bestimmen, die vor dem Übergang des Berührungseingabewerkzeugs von dem Tastaturabschnitt (10) zu dem Steuerabschnitt (12) bestimmt werden.

3. Vorrichtung nach Anspruch 2, wobei der Prozessor (8) ferner dazu eingerichtet ist, die Texteingabedaten anhand einer Bewegung des Berührungseingabewerkzeugs in dem Tastaturabschnitt (10) zu bestimmen und, wenn die durchgehende Bewegung in dem Steuerabschnitt (12) endet, diese Systemoperation als Reaktion auf die Detektion einer Bewegung in dem Steuerabschnitt (12), die mit einer Ausführungssystemoperation assoziiert ist, auszuführen.

4. Vorrichtung nach einem der vorhergehenden Ansprüche, wobei der Prozessor (8) bei der durchgehenden Bewegung eines Berührungseingabewerkzeugs auf dem Bildschirm (6) in dem Tastaturabschnitt (10) ferner dazu eingerichtet ist, die Darstellung eines visuellen Elements auf dem Bildschirm (6), das mit einer bestimmten Systemoperation assoziiert ist, in Abhängigkeit von Texteingabedaten zu steuern, die anhand der Bewegung des Berührungseingabewerkzeugs in dem Tastaturabschnitt (10) bestimmt werden.

5. Vorrichtung nach einem der vorhergehenden Ansprüche, wobei der Prozessor (8) dazu eingerichtet ist, zu bestimmen, dass eine in dem Steuerabschnitt (12) detektierte Bewegung teilweise einer Bewegung entspricht, die es gestattet, eine Systemoperation zu bestimmen, und ferner dazu eingerichtet ist, eine Textdarstellung der Systemoperation, deren zugehörige Bewegung teilweise der in dem Steuerabschnitt (12) detektierten Bewegung entspricht, anzuzeigen und/oder eine Darstellung einer Bewegung anzuzeigen, die noch ausgeführt werden muss, um die Systemoperation, deren zugehörige Bewegung teilweise der in dem Steuerabschnitt (12) detektierten Bewegung entspricht, auszuwählen.

6. Vorrichtung nach einem der vorhergehenden Ansprüche, wobei der Prozessor (8) dazu eingerichtet ist, die Anzeige eines kontextabhängigen Abschnitts in dem Steuerabschnitt (12) in Abhängigkeit von Texteingabedaten zu steuern.

7. Verfahren zur Verwaltung einer Berührungseingabe von Daten, das durch einen Computer umgesetzt wird, der eine Anzeige aufweist, die zur Erfassung von Berührungen fähig ist, beinhaltend die folgenden Operationen:
a) Erfassen von Texteingabedaten in einem Tastaturabschnitt (10) des Bildschirms (6),
b) Erfassen von Bewegungsdaten eines Berührungseingabewerkzeugs,
c) als Reaktion auf die Detektion einer durchgehenden Bewegung des Berührungseingabewerkzeugs von dem Tastaturabschnitt (10) zu einem Steuerabschnitt des Bildschirms (6),
c1) Detektieren der Bewegung des Berührungseingabewerkzeugs in dem Steuerabschnitt (12) des Bildschirms (6),
c2) Analysieren, ob diese Bewegung einer Geste entspricht, die die Ausführung einer Systemoperation auslöst, und ggf.
c3) Bestimmen der Systemoperation in Übereinstimmung mit der in der Operation c1) detektierten Bewegung und Anzeigen einer Darstellung eines visuellen Elements auf dem Bildschirm (6), das mindestens mit der Systemoperation assoziiert ist, und
c4) wenn die durchgehende Bewegung in dem Steuerabschnitt (12) endet, Ausführen der Systemoperation.

8. Verfahren nach Anspruch 7, wobei die Operation c3) ferner das Bestimmen der Systemoperation in Abhängigkeit von Texteingabedaten, die in der Operation a) erfasst werden, beinhaltet.

9. Verfahren nach Anspruch 7 oder 8, wobei die Operation c1) die Bestimmung von Texteingabedaten anhand einer durchgehenden Bewegung des Berührungseingabewerkzeugs in dem Tastaturabschnitt (10) beinhaltet.

10. Verfahren nach einem der Ansprüche 7 bis 9, wobei die Operation a) die Bestimmung von Texteingabedaten, die anhand der Bewegung des Berührungseingabewerkzeugs in dem Tastaturabschnitt (10) bestimmt werden, und die Anzeige eines visuellen Elements auf dem Bildschirm (6), das mit einer Systemoperation, die in Abhängigkeit von den Texteingabedaten bestimmt wird, assoziiert ist, beinhaltet.

11. Verfahren nach einem der Ansprüche 7 bis 10, wobei die Operation c3) die Bestimmung einer oder mehrerer Systemoperationen, die der Bewegung der Operation c1) entsprechen, und die Anzeige, für mindestens gewisse dieser einen oder dieser mehreren Systemoperationen, der einen oder der mehreren Bewegungen, die noch auszuführen sind, um mindestens gewisse dieser einen oder dieser mehreren Systemoperationen auszuwählen, beinhaltet.

12. Verfahren nach einem der Ansprüche 7 bis 11, wobei die Operation c) die Anzeige eines kontextabhängigen Abschnitts in dem Steuerabschnitt (12) in Abhängigkeit von Texteingabedaten der Operation a) beinhaltet.

## Claims

1. Computer device comprising a screen (6) capable of touch sensing, and a processor (8) designed to control the display of a representation of a keypad on a keypad portion (10) of the screen (6) and to determine text input data when a touch input tool is moved over the keypad portion (10) of the screen (6), **characterized in that**
the processor (8) is furthermore designed, when a touch input tool is moved continuously over the screen (6), to detect the movement of the touch input tool from the keypad portion (10) to a control portion (12) of the screen (6), to detect the movement of the touch input tool into the control portion (12),analyze whether this movement corresponds to a gesture triggering the execution of a system operation and, if so, determine the system operation on the basis of this movement and display a representation on the screen (6) of a visual element associated at least with said system operation, and, if the continuous movement ends in the control portion (12), to execute the system operation.

2. Device according to claim 1, wherein the processor (8) is furthermore designed, when a touch input tool is moved continuously over the screen (6), to furthermore determine the system operation based on text input data determined before transferring the continuous movement of the touch input tool from the keypad portion (10) to the control portion (12).

3. Device according to claim 2, wherein the processor (8) is furthermore designed, to determine the text input data on the basis of a movement of the touch input tool in the keypad portion (10), and, if the continuous movement ends in the control portion (12), to execute this system operation in response to the detection of a movement in the control portion (12) associated with an execution system operation.

4. Device according to one of the preceding claims, wherein the processor (8) is further designed, when a touch input tool is moved continuously over the screen (6) in the keypad portion (10), to control the representation on the screen (6) of a visual element associated with a system operation determined according to text input data determined based on the movement of the touch input tool in the keypad portion (10).

5. Device according to one of the preceding claims, wherein the processor (8) is designed to determine that a movement detected in the control portion (12) corresponds partially to a movement for determining a system operation, and is furthermore designed to display a text representation of the system operation which associated movement corresponds partially to the movement detected in the control portion (12) and/or to display a representation of a remaining movement to be carried out to designate the system operation which associated movement corresponds partially to the movement detected in the control portion (12).

6. Device according to one of the preceding claims, wherein the processor (8) is designed to control the display of a context portion in the control portion (12) based on text input data.

7. Touch data input management method used by a computer having a display capable of touch sensing, comprising the following operations:
a) capturing text input data in a keypad portion (10) of the screen (6),
b) capturing movement data of a touch input tool,
c) in response to the detection of a continuous movement of the touch input tool from the keypad portion (10) to a control portion of the screen (6),
c1) detecting the movement of the touch input tool in the control portion (12) of the screen (6),
c2) analyze whether this movement corresponds to a gesture triggering the execution of a system operation and, if so,
c3) determining a system operation corresponding to the movement detected in operation c1), and displaying a representation on the screen (6) of a visual element associated at least with said system operation, and,
c4) if the continuous movement ends in the control portion (12), executing the system operation.

8. Method according to claim 7, wherein operation c3) further comprises determining the system operation based on text input data captured in operation a).

9. Method according to claim 7 or 8, wherein operation c1) comprises the determination of text input data from a continuous movement of the touch input tool in the keypad portion (10).

10. Method according to one of claims 7 to 9, wherein operation a) comprises the determination of text input data determined from the movement of the touch input tool in the keypad portion (10) and the display on the screen (6) of a visual element associated with a system operation determined based on the text input data.

11. Method according to one of claims 7 to 10, wherein operation c3) comprises the determination of one or more system operations corresponding to the movement of operation c1), and the display for at least some of this or these several system operations of the remaining movement(s) to be carried out to designate at least some of this or these several system operations.

12. Method according one of claims 7 to 11, wherein operation c) comprises the display of a context portion in the control portion based on text input data from operation a) .
